# EUROPEAN PATENT SPECIFICATION

(11) **EP 0 814 284 B1**
(45) Date of publication and mention of the grant of the patent: **08.03.2000**
(21) Application number: 97201729.7
(22) Date of filing: 07.06.1997
(51) Int. Cl.: F16H 61/00, F16H 55/52

(54) **Transmission unit for motor vehicles**
Stufenlos regelbares Getriebe für Kraftfahrzeuge
Variateur continu de vitesse pour véhicule à moteur

(30) Priority: 18.06.1996 BE 9600557
(43) Date of publication of application: 29.12.1997
(73) Proprietor: VCST, naamloze vennootschap, B-3800 Sint-Truiden (BE)
(72) Inventor: Van der Hardt, Aberson Frederik Ernst Carel, 3500 Hasselt (BE)
(74) Representative: Donné, Eddy

(56) References cited:
- EP-A- 0 321 921
- EP-A- 0 520 611
- BE-A- 1 005 746
- GB-A- 2 064 686
- US-A- 4 143 558
- PATENT ABSTRACTS OF JAPAN vol. 8, no. 37 (M-277) [1474] , 17 February 1984 & JP 58 193962 A (ALSHIN SEIKI), 11 November 1983,

## Description

This invention relates to a transmission unit for motor vehicles, more particularly of the type whereby the transmission ratio is regulated infinitely by means of a continuously variable transmission. A transmission unit in accordance with the features of the preamble of claim 1 is known from BE-1 005 746 or US-A-4 143 558.

Such continously variable transmission consists of two pulleys between which an endless transmission element is provided. Normally, the pulleys both consist of conical pulley halves which are mutually displaceable, such that the running radii of the transmission element on the pulleys can be changed, as a result of which another transmission ratio is obtained.

Hereby, the displaceable pulley halves are displaced and/or pressed on by means of at least one cylinder-piston unit. In the pressure chamber of this cylinder-piston unit, a static pressure is applied in order to press on and/or displace the corresponding pulley half. At high rotational speeds, an undesired centrifugal pressure is superimposed upon this static pressure.

With continously variable transmissions for motor vehicles, this problem, in first instance, becomes manifest at the secondary pulley, particularly at high speeds of the vehicle, as the rotational speed of the secondary pulley, anyhow, is proportional to the speed of the vehicle and this pulley therefore has a low rotational speed in the "low ratio" and a high rotational speed in the "overdrive ratio".

In order to compensate the centrifugal pressure, it is known to equip the aforementioned transmission units with a pressure compensation chamber which, by means of a passage, is in connection with the aforementioned pressure chamber, in such a way that, at opposite sides of the piston of the cylinder-piston unit, a centrifugal pressure is created.

Furthermore, it is known to provide the aforementioned passage with a passage-regulating element which provides for that, at low rotational speed, little or no hydraulic medium can flow to the pressure compensation chamber, whereas at high rotational speed, however, much medium is let through.

At low rotational speed, the centrifugal pressure, however, is very small and the compensation, then, is not necessary. Moreover, especially with low rotational speeds the static pressure in the pressure chamber in general becomes the highest, and as a result, in case of an open passage, also the parasitary liquid consumption, in other words, the quantity of liquid escaping through the aforementioned passage would be large, which has to be prevented as, as a result of this, the critical capacity available of the pump which supplies the hydraulic medium is reduced.

According to the known possibility which is described in BE 1.005.746, use is made of a pressure-sensitive passage-regulating element which is provided in the piston between the pressure chamber and the pressure compensation chamber.

According to the other known possibility which is described in US 4.143.558, use is made of a passage-regulating element which extends through the piston between the pressure chamber and the pressure compensation chamber, whereby in this passage-regulating element, a passage is present which is closed off by the piston for well-defined positions of the movable pulley half.

The fact that, according to these two possibilities, the passage-regulating element is provided in the piston which separates the pressure chamber from the pressure compensation chamber, implicits that these passage-regulating elements are situated rather far from the center of rotation, as a result of which disturbances occur due to contaminations present in the hydraulic medium. These contaminations are namely forced radially outward by the centrifugal force, such that they end up at the location of the passage-regulating element. Such passage-regulating element is very sensitive for such contaminations as the passage present herein, as known, is very narrow.

The aforementioned two possibilities also show the disadvantage that they are relatively expensive as special elements have to be realized in order to form the passage.

Further, the aforementioned form of embodiment described in US 4.153.558 shows the disadvantage that the passage-regulating element is strongly subjected to wear and tear due to the sliding movement through the piston.

The present invention aims at a transmission unit which is further developed over the prior art.

To this aim, the invention relates to a transmission unit consisting of the features of claim 1.

Preferably, the passage is provided with a passage regulation.

More particularly shall this passage regulation be formed by closing means which are integrated in the aforementioned shaft and in the hub of the displaceable pulley half concerned. Hereby, it is preferred that the passage is formed by a conduit system through the hub, which, on one hand, is connected to the pressure chamber or to the pressure supply conduit to this pressure chamber, and, on the other hand, gives out on the shaft, and a conduit system cooperating herewith and extending through the shaft, which, on one hand, gives out below the hub, and, on the other hand, gives out in the pressure compensation chamber, whereby a connection between the two conduit systems is made as soon as the hub takes a well-defined axial position in respect to the shaft.

Due to the fact that the passage is provided at the location of the aforementioned shaft, and eventually the hub, the advantage is obtained that it is impossible for contaminations to get into the passage, as the entrance of this passage is situated at a very small radius and the contaminations always move away therefrom.

The fact that the passage is realized in the shaft, and eventually in the hub, thus, in existing parts, offers the advantage that no separate passage elements have to be manufactured and to be mounted.

Due to the fact that the shaft and the hub are constructed rather massive, the wear and tear due to the axial displacement can be negligible, contrary to the wear and tear occuring with the passage regulating element discussed heretofore which is described in US 4.143.558.

With the intention to better show the characteristics according to the invention, several preferred forms of embodiment are described hereafter, as example without any limitative character, with reference to the accompanying drawings, wherein:
figure 1 schematically represents a transmission unit according to the invention;
figure 2 schematically and on a larger scale represents the part which is indicated by F2 in figure 1;
figure 3 represents the part of figure 2 for another position;
figure 4 represents a variant of the part which is represented in figure 3;
figures 5, 6 and 7, for a number of variants, represent the part which is indicated by F5 in figure 2.

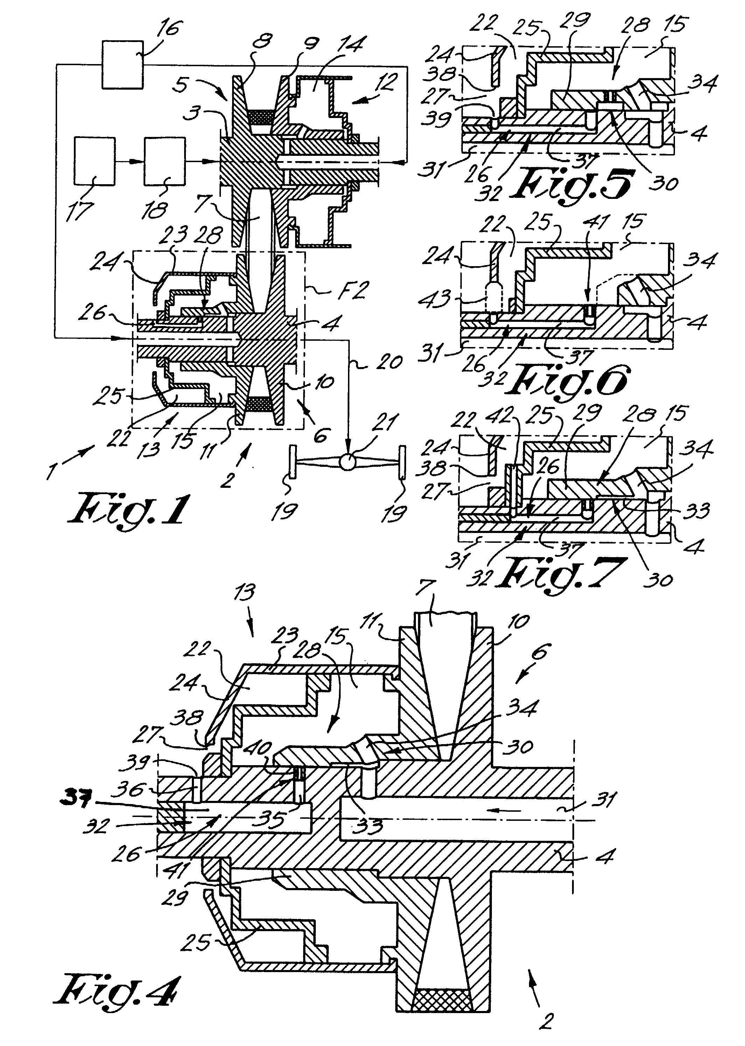

In figure 1, a transmission unit for motor vehicles is represented which comprises a continuously variable transmission 2, as well as means for changing the transmission ratio thereof.

The continuously variable transmission 2 mainly consists of an ingoing shaft 3, an outgoing shaft 4, two pulleys 5-6 which are mounted on the shafts 3 and 4 respectively, and an endless transmission element 7, such as a belt. The pulleys 5 and 6 are composed of conical pulley halves 8-9 and 10-11, of which each time one pulley half 8, respectively 10, is axially immobile and of which the second pulley half 9, respectively 11, is hydraulically displaceable in axial direction.

The means for changing the transmission ratio consist of cylinder-piston units 12 and 13 which cooperate with the displaceable pulley halves 9 and 11 respectively. By supplying more or less hydraulic medium to the pressure chambers 14 and 15 of these cylinder-piston units 12 and 13, by means of a suitable control unit 16, the transmission ratio can be changed.

The ingoing shaft 3, as known, is driven by the motor 17 of the vehicle, by means of a coupling and reversing unit 18. The outgoing shaft 4 provides in the driving of the front and/of back wheels 19 over a transmission 20 and differential 21.

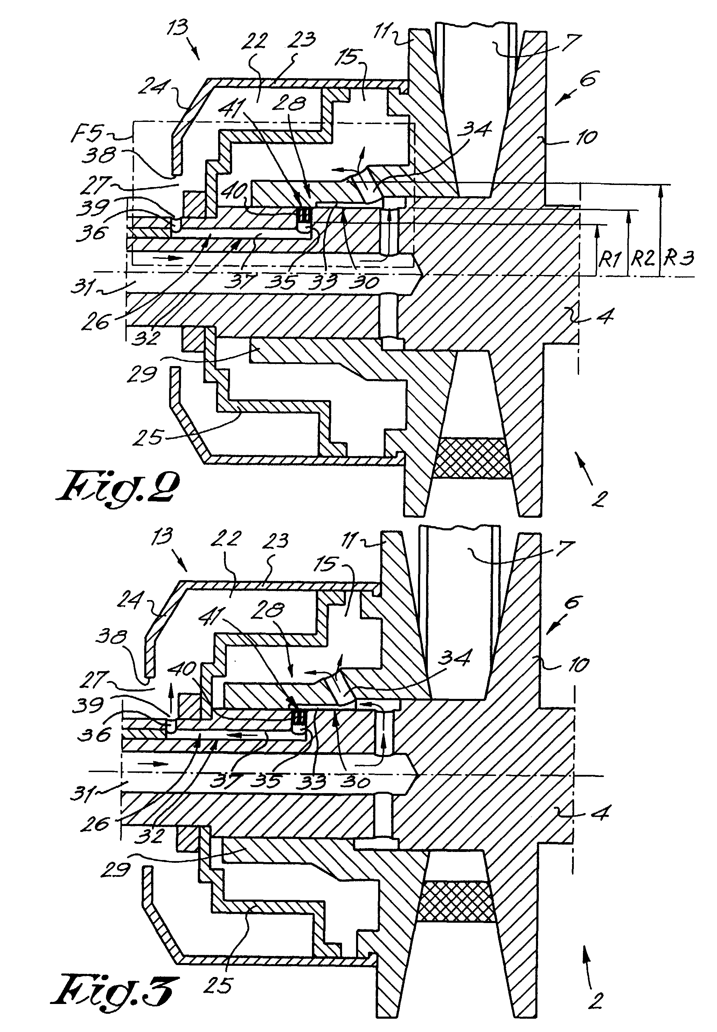

As represented in figure 2, it is known to equip the transmission unit 1, and particularly the secondary pulley 6, with a pressure compensation chamber 22 cooperating with the aforementioned pressure chamber 15. This pressure compensation chamber 22 mainly consists of the prolongation of the cylinder 23 of the cylinder-piston unit 13 and a deflecting partition 24. As a result, the pressure compensation chamber 22 and the pressure chamber 15 are situated at opposite sides of the piston 25 and can be connected by means of a passage 26. The surplus hydraulic medium can leave the pressure compensation chamber 22 through a relatively wide opening 27.

The particularity of the invention consists in that, as represented in the figures 2 and 3, the passage 26 is situated at the location of the shaft, in this case the outgoing shaft 4, whereby this passage 26 extends through this shaft 4 from in front of to behind the piston 25 and, thereby, can realize a connection between the pressure chamber 15 and the pressure compensation chamber 22.

Preferably, the passage 26 is provided with a passage regulation 28 which provides for that the passage 26 is only opened as soon as a well-defined position between the pulley halves 10-11 is surpassed, more particularly a position whereby in the normal usage position higher rotational speeds will occur and a pressure compensation is desired.

As represented in the figures 2 and 3, the passage regulation 28 preferably is integrated in the shaft and hub construction which is formed by the shaft 4 and the hub 29, in such a manner that the shifting of the hub 29 over the shaft 4 functions as a slide valve. As represented, the passage 26 to this end can be composed of a conduit system 30 through the hub 29, which, on one hand, connects to the pressure chamber 15 and/or with the pressure supply conduit 31 to this pressure chamber 15, and, on the other hand, gives out on the shaft 4, and a conduit system 32 cooperating therewith, extending through the shaft 4, which, on one hand, gives out under the hub 29 and, on the other hand, gives out in the pressure compensation chamber 22, whereby a connection between the two conduit systems 30-32 is made as soon as the hub 29 takes a well-defined axial position in respect to the shaft 4.

The conduit system 30 is preferably formed by an axial recess 33, provided at the inside of the hub 29, of a well-defined length, which gives out in the passage 34 connecting the pressure supply conduit 31 and the pressure chamber 15.

The conduit system 32 preferably consists of radial bores 35-36 which are situated at opposite sides of the piston 25 and are connected to each other by means of an axial channel 37.

It is noted that the deflecting partition 24 is constructed in such a manner that the free extremity 38 is situated beyond the piston 25, in such a manner that it is axially also situated further than the exit 39 of the passage 26, however, at least for the positions whereby a connection is established between the pressure chamber 15 and the pressure compensation chamber 22. As a result of this, the advantage is created that the passage 26 constructively can be realized rather simple as then no special provisions have to be made in order to obtain that the hydraulic medium, emerging from the passage 26, gets between the piston 25 and the deflecting partition 24.

On the other hand, it is preferred that the deflecting partition 24, at least for the position whereby the displaceable pulley half 11 is situated in the closest proximity to the axially fixed pulley half 10, and more particularly for all positions whereby no open connection by means of the passage 26 is established, is situated with its free extremity 38 in front of or at the height of the exit 39. Hereby, it is excluded that the cylinder 23 becomes unnecessary long and the construction might gain unnecessary weight.

In the passage 26, a passage member 40 may be provided which, for example, consists of an element which is pressed or screwed into the bore 36 and which is provided with a restriction 41 which is chosen such that the optimum flow rate is obtained. By providing this restriction 41 in a separate element, it can easily be manufactured with very narrow tolerances.

In the example of figures 2 and 3, the pressure supply conduit 31 is situated at the side of the movable pulley half 11, and the channel 37 extends radially alongside thereto. In such a case, the pressure supply conduit 31 preferably is situated in the center of the shaft 4, and the channel 37 is situated at a distance outside therefrom.

The funtioning of the whole can easily be deduced from the figures 2 and 3.

In the position of figure 2, whereby normally low rotational speeds prevail, as mentioned before, a centrifugal compensation is not desired. Hereby, the passage 26 is closed as the hub 29 is situated in front of the restriction 41, as a result of which no hydraulic medium can flow to the pressure compensation chamber 22.

As soon as the displaceable pulley half 11 is displaced over a well-defined distance from the fixed pulley half 10, which normally means that the pulley 6 turns at a higher rotational speed, as represented in figure 3, a connection is formed between the pressure chamber 15 and the pressure compensation chamber 22, because the hub 29 becomes situated with the recess 33 in front of the bore 35. As a result of this, hydraulic medium can flow through the passage 26 to the pressure compensation chamber 22, such that, by the centrifugal force exerted upon this medium, a pressure compensation is created.

As the restriction 41 is situated on a rather small turning radius, and as the centrifugal action counteracts to the flow direction of the hydraulic medium during the compensation, the advantage is created that this restriction 41 is kept free from contamination which might already be present in the pressure chamber or in the supplied oil.

In order to use this effect in an optimum manner, it can generally be stated that the restriction 41 preferably is situated between a radius R1 which is somewhat smaller than the radius R2 of the shaft 4, for example, is 70 % thereof, and the radius R3 of the circumference of the hub 29. Furthermore, the restriction 41 preferably is provided at the location of the aforementioned bore 35.

In figure 4, a variant is represented whereby the pressure supply conduit 31 is situated at the side of the axially fixed pulley half 10. In this case, preferably not only this pressure supply conduit 31, but also the channel 37 is situated in the turning center of the shaft 4, which results in a better counterbalance.

In figure 5, another variant is represented which shows that the passage 26 and the pressure supply conduit 31 can give out separately into the pressure chamber 15.

It is clear that the restriction 41 may be realized at different locations. In figure 5, for example, the passage member 40 with the restriction 41 is provided in the hub 29.

However, preferably, use shall be made of a passage regulation 28, it is, according to the invention, not excluded to make use of a permanent passage 26, for example, such as represented in figure 6.

According to another variant, in the passage 26 realized according to the invention, also a pressure-sensitive passage-regulating element may be installed, for example, of the type such as described in BE 1.005.746 of applicant, either combined with a passage regulation 28 as mentioned heretofore or not.

The exit 39 not necessarily has to be at the location of the shaft 4. For example, a channel may be connected to the bore 36, as a result of which the exit 39 becomes situated at a larger radial distance, between the piston 25 and the deflecting partition 24. Such channel 42 may, for example, extend through the piston 25, such as represented in figure 7.

According to the invention, it is neither excluded to realize the passage regulation 28 not by means of the hub 29, but by means of another closing element which also performs an axial displacement with the pulley half 11. As represented schematically in figure 6, such closing element 43, for example, may be coupled to the deflecting partition 24.

In the major part of the working field, the secondary pulley 6 revolves faster than the primary pulley 5. Consequently, the invention described heretofore will preferably be applied at least to the secondary pulley 6 and shall, in the case that a passage regulation 28 is applied, this latter be realized in such a manner that the passage 26 is closed as soon as the running radius of the transmission element 7 on the secondary pulley 6 surpasses a predetermined value. However, this does not exclude that both pulleys 5-6, or only the primary pulley 5, may be equipped with a pressure compensation system according to the invention.

The present invention is in no way limited to the forms of embodiment described by means of example and represented in the figures, on the contrary such transmission unit for motor vehicles may be realized in various forms and dimensions without leaving the scope of the invention.

## Claims

1. Transmission unit, consisting of a continuously variable transmission (2), formed of two pulleys (5,6) in between which an endless transmission element (7) is provided, whereby at least one of said pulleys is variable and, to this end, has at least one pulley half (11) which can be displaced in respect to the other pulley half (10) by means of shifting it over a shaft (4); at least one hydraulic cylinder-piston unit (13) with a pressure chamber (15) cooperating with said at least one pulley half (11) of the continously variable transmission (2); a pressure compensation chamber (22) cooperating with the said pressure chamber (15); and a passage system (26) which can perform a connection of the pressure compensation chamber (22) to the pressure chamber (15), characterized in that said connection passage system (26) is provided partly within said shaft (4) and partly at its outer circumference.

2. Transmission unit according to claim 1, characterized in that the connection passage system (26) passes through the shaft (4).

3. Transmission unit according to claim 1 or 2, characterized in that the connection passage system (26) is provided with a passage regulation element (28).

4. Transmission unit according to claim 3, characterized in that the passage regulation element (28) makes use of a closing element (29,43) which opens and closes the connection passage system (26) in function of the mutual position between the pulley halves (10,11) concerned, whereby this closing element (29,43) is controlled by the displacement of the displaceable pulley half (11).

5. Transmission unit according to claim 4, characterized in that the displaceable pulley half (11) is fixed at the shaft (4) by means of a hub (29) and that the passage regulation element (28) is formed by closing means which are integrated in said shaft (4) and in the aforementioned hub (29).

6. Transmission unit according to claim 5, characterized in that the connection passage system (26) is formed by a conduit (30) through the hub (29), which, on one hand, is connected to said pressure chamber (15) or to its pressure supply conduit (31), and, on the other hand, gives out on the shaft (4) concerned, and a conduit (32) cooperating therewith and extending through said shaft (4) which, on one hand, gives out under the hub (29), and, on the other hand, gives out in the pressure compensation chamber (22), at least for the positions whereby a connection between the pressure chamber (15) and the pressure compensation chamber (22) is established, whereby the hub (29) and the shaft (4) function as a slide valve, such that a connection between the two conduits (30,32) is made as soon as the hub (29) takes a well-defined axial position in respect to the aforementioned shaft (4).

7. Transmission unit according to any of the aforegoing claims, characterized in that the connection passage system (26) comprises a conduit (32) through the shaft (4) which is composed of two radial bores (35,36) and an axial channel (37) connecting both bores (35,36).

8. Transmission unit according to claims 6 and 7, characterized in that the conduit (30) through the hub (29) mainly consists of a recess (33) at the inside of the hub (29), of a well-defined length, which connects to a passage (34) connecting the pressure supply conduit (31) to the pressure chamber (15).

9. Transmission unit according to any of the aforegoing claims, characterized in that a restriction (41) is provided in the connection passage system (26).

10. Transmission unit according to claim 9, characterized in that the restriction (41) is situated between a radius (R1) which is somewhat smaller than the radius (R2) of the shaft (4), for example, is 70 % thereof, and the radius (R3) of the circumference of the hub (29).

11. Transmission unit according to claims 7 and 10, characterized in that the restriction (41) is provided in a passage member (40) which is provided in the bore (35) which forms the entrance of the conduit (32) within the shaft (4).

12. Transmission unit according to any of the aforegoing claims, characterized in that the exit (39) of the connection passage system (26) is situated at the surface of the shaft (4) and behind the piston (25) of said cylinder-piston unit (13) and that a deflecting partition connected to the cylinder (23) of said cylinder-piston unit (13) (24), at least for all positions whereby a connection is formed between the pressure chamber (15) and the pressure compensation chamber (22), reaches up to beyond said exit (39).

13. Transmission unit according to claim 12, characterized in that the deflecting partition (24), at least for the position whereby the displaceable pulley half (11) is situated in the closest proximity to the axially fixed pulley half (10), and more particularly for all positions whereby no open connection by means of the connection passage system (26) is established, is situated with its free extremity (38) in front of or at the height of the exit (39).

14. Transmission unit according to any of the aforegoing claims, characterized in that the hydraulic medium, from the side of the axially fixed pulley half (10), is supplied by means of a pressure supply conduit (31) which is situated in the center of rotation of the shaft (4) and that the connection passage system (26) has an axial channel (37) which is situated in the extension of the pressure supply conduit (31) (Fig. 4).

15. Transmission unit according to any of the aforegoing claims, characterized in that at least at the secondary pulley (6) said pressure compensation is performed, by means of said pressure compensation chamber (22) and said connection passage system (26), and that it comprises said passage regulation element (28) with which the connection passage system (26) is closed off as soon as the running radius of the transmission element (7) on the secondary pulley (6) becomes larger than a predetermined value.

## Patentansprüche

1. Getriebeeinheit, bestehend aus einem stufenlos verstellbaren Getriebe (2), gebildet aus zwei Riemenscheiben (5,6), zwischen denen ein Endlos-Übertragungselement (7) angebracht ist, wobei zumindest eine der besagten Riemenscheiben variabel ist und zu diesem Zweck zumindest eine Riemenscheibenhälfte (11) aufweist, die in Bezug zur anderen Riemenscheibenhälfte (10) durch Verschieben über eine Welle (4) bewegt werden kann; zumindest eine hydraulische Zylinder-Kolben-Einheit (13) mit einer Druckkammer (15), die mit besagter zumindest einer Riemenscheibenhälfte (11) des stufenlos verstellbaren Getriebes (2) zusammenwirkt; eine Druckausgleichskammer (22), die mit der besagten Druckkammer (15) zusammenwirkt; und einem Durchflusssystem (26), das eine Verbindung von der Druckausgleichskammer (22) zur Druckkammer (15) herstellen kann, dadurch gekennzeichnet, dass besagtes Verbindungsdurchflusssystem (26) teilweise innerhalb besagter Welle (4) und teilweise an ihrem Aussenumfang angebracht ist.

2. Getriebeeinheit gemäß Anspruch 1, dadurch gekennzeichnet, dass das Verbindungsdurchflusssystem (26) durch die Welle (4) verläuft.

3. Getriebeeinheit gemäß Anspruch 1 oder 2, dadurch gekennzeichnet, dass das Verbindungsdurchflusssystem (26) mit einem Durchflussregelelement (28) versehen ist.

4. Getriebeeinheit gemäß Anspruch 3, dadurch gekennzeichnet, dass das Durchflussregelelement (28) ein Schließelement (29,43) verwendet, das das Verbindungsdurchflusssystem (26) in Funktion der gegenseitigen Position zwischen den betreffenden Riemenscheibenhälften (10,11) abschließt, wobei dieses Schließelement (29,43) durch die Verschiebung der verschiebbaren Riemenscheibenhälfte (11) gesteuert wird.

5. Getriebeeinheit gemäß Anspruch 4, dadurch gekennzeichnet, dass die verschiebbare Riemenscheibenhälfte (11) mittels einer Nabe (29) an der Welle (4) befestigt ist und dass das Durchflussregelelement (28) aus Schließmitteln geformt wird, die in besagter Welle (4) und in der vorgenannten Nabe (29) integriert sind.

6. Getriebeeinheit gemäß Anspruch 5, dadurch gekennzeichnet, dass das Verbindungsdurchflusssystem (26) von einer Leitung (30) durch die Nabe (29) gebildet wird, die einerseits mit besagter Druckkammer (15) oder ihrer Druckzufuhrleitung (31) verbunden ist und andererseits an der betreffenden Welle (4) mündet, und einer damit zusammenwirkenden und sich durch besagte Welle (4) erstreckenden Leitung (32), die einerseits unter der Nabe (29) mündet und andererseits in der Drückausgleichskammer (22) mündet, zumindest für die Positionen, wobei eine Verbindung zwischen der Druckkammer (15) und der Druckausgleichskammer (22) besteht, wobei die Nabe (29) und die Welle (4) wie ein Schieberventil funktionieren, derart, dass eine Verbindung zwischen den beiden Leitungen (30,32) hergestellt wird, sobald die Nabe (29) eine bestimmte axiale Position in Bezug zur vorgenannten Welle (4) einnimmt.

7. Getriebeeinheit gemäß einem der vorgenannten Ansprüche, dadurch gekennzeichnet, dass das Verbindungsdurchflusssystem (26) eine Leitung (32) durch die betreffende Welle (4) umfasst, die sich aus zwei radialen Bohrungen (35,36) und einem die beiden Bohrungen (35,36) verbindenden axialen Kanal (37) zusammensetzt.

8. Getriebeeinheit gemäß Ansprüchen 6 und 7, dadurch gekennzeichnet, dass die Leitung (30) durch die Nabe (29) hauptsächlich aus einer Aussparung (33) an der Innenseite der Nabe (29) besteht, mit einer bestimmten Länge, die an einen Durchlass (34) anschließt, der die Druckzufuhrleitung (31) mit der Druckkammer (15) verbindet.

9. Getriebeeinheit gemäß einem der vorgenannten Ansprüche, dadurch gekennzeichnet, dass eine Begrenzung (41) im Verbindungsdurchflusssystem (26) angebracht ist.

10. Getriebeeinheit gemäß Anspruch 9, dadurch gekennzeichnet, dass die Begrenzung (41) sich zwischen einem Radius (R1), der etwas kleiner als der Radius (R2) der Welle (4) ist, beispielsweise 70 % davon beträgt, und dem Radius (R3) des Umfangs der Nabe (29) befindet.

11. Getriebeeinheit gemäß den Ansprüchen 7 und 10, dadurch gekennzeichnet, dass die Begrenzung (41) in einem Durchflusselement (40) angebracht ist, das in der Bohrung (35) angebracht ist, die den Eingang der Leitung (32) in der Welle (4) bildet.

12. Getriebeeinheit gemäß einem der vorgenannten Ansprüche, dadurch gekennzeichnet, dass der Auslass (39) des Verbindungsdurchflusssystems (26) sich an der Oberfläche der betreffenden Welle (4) und hinter dem Kolben (25) besagter Zylinder-Kolben-Einheit (13) befindet und dass eine mit dem Zylinder (23) verbundene Umlenkwand (24), zumindest für alle Positionen, wobei eine Verbindung zwischen der Druckkammer (15) und der Druckausgleichskammer (22) gebildet wird, bis über den besagten Auslass (39) hinaus reicht.

13. Getriebeeinheit gemäß Anspruch 12, dadurch gekennzeichnet, dass die Umlenkwand (24), zumindest für die Position, wobei die verschiebbare Riemenscheibenhälfte (11) sich am dichtesten bei der axial festen Riemenscheibenhälfte (11) befindet, und spezieller für alle Positionen, wobei keine offene Verbindung mittels des Verbindungsdurchflusssystems (26) besteht, sich mit ihrem freien Ende (38) vor oder in Höhe des Auslasses (39) befindet.

14. Getriebeeinheit gemäß einem der vorgenannten Ansprüche, dadurch gekennzeichnet, dass das Hydraulikmedium, von der Seite der axial festen Riemenscheibenhälfte (10), mittels einer Druckzufuhrleitung (31), die sich im Drehzentrum der Welle (4) befindet, zugeführt wird und dass das Verbindungsdurchflusssystem (26) einen axialen Kanal (37) aufweist, der sich in der Verlängerung der Druckzufuhrleitung (31) befindet (Fig.4).

15. Getriebeeinheit gemäß einem der vorgenannten Ansprüche, dadurch gekennzeichnet, dass zumindest an der sekundären Riemenscheibe (6) besagter Ausgleich durchgeführt wird, mittels besagter Druckausgleichskammer (22) und besagten Verbindungsdurchflusssystems (26), und dass sie besagtes Durchflussregelelement (28) umfasst, womit das Verbindungsdurchflusssystem (26) geschlossen wird, sobald der Laufradius des Übertragungselements (7) auf der sekundären Riemenscheibe (6) einen zuvor festgelegten Wert überschreitet.

## Revendications

1. Unité de transmission constituée par une transmission à réglage continu (2) formée de deux poulies (5, 6) entre lesquelles est prévu un élément de transmission sans fin (7), par laquelle au moins une desdites poulies est variable et à cet effet possède au moins une demi-poulie (11) apte à se déplacer par rapport à l'autre demi-poulie (10) en se décalant par-dessus un arbre (4); au moins une unité hydraulique (13) à piston-cylindre comprenant une chambre de pression (15) coopérant avec la ou lesdites demi-poulies (11) de la transmission à réglage continu (2); une chambre de compensation de pression (22) coopérant avec ladite chambre de pression (15); et un système de passage (26) qui est à même d'établir une connexion entre la chambre de compensation de pression (22) et la chambre de pression (15), caractérisée en ce que ledit système de passage de connexion (26) est prévu en partie à l'intérieur dudit arbre (4) et en partie sur sa circonférence externe.

2. Unité de transmission selon la revendication 1, caractérisée en ce que le système de passage de connexion (26) traverse l'arbre (4).

3. Unité de transmission selon la revendication 1 ou 2, caractérisée en ce que le système de passage de connexion (26) est muni d'un élément de réglage de passage (28).

4. Unité de transmission selon la revendication 3, caractérisée en ce que l'élément de réglage de passage (28) fait usage d'un élément de fermeture (29, 43) qui ouvre et ferme le système de passage de connexion (26) en fonction de la position réciproque entre les demi-poulies (10, 11) en question, cet élément de fermeture (29, 43) étant commandé par le déplacement de la demi-poulie (11) apte à se déplacer.

5. Unité de transmission selon la revendication 4, caractérisée en ce que la demi-poulie (11) apte à se déplacer est fixée à l'arbre (4) à l'aide d'un moyeu (29) et en ce que l'élément de réglage du passage (28) est formé à l'aide de moyens de fermeture qui sont intégrés dans ledit arbre (4) et dans le moyeu (29) susmentionné.

6. Unité de transmission selon la revendication 5, caractérisée en ce que le système de passage de connexion (26) est formé par un conduit (30) s'étendant à travers le moyeu (29), qui, d'une part, est relié à ladite chambre de pression (15) ou à son conduit d'alimentation de pression (31) et, d'autre part, aboutit sur l'arbre (4) concerné, et par un conduit (32) coopérant avec le premier cité et s'étendant à travers ledit arbre (4), qui, d'une part aboutit en-dessous du moyeu (29) et d'autre part aboutit dans la chambre de compensation de pression (22), au moins pour les positions dans lesquelles une connexion s'établit entre la chambre de pression (15) et la chambre de compensation de pression (22), par laquelle le moyeu (29) et l'arbre (4) font office de soupape à tiroir de telle sorte qu'une connexion entre les deux conduits (30, 32) s'établit dès que le moyeu (29) prend une position axiale bien définie par rapport à l'arbre (4) susmentionné.

7. Unité de transmission selon l'une quelconque des revendications ci-dessus, caractérisée en ce que le système de passage de connexion (6) comprend un conduit (32) s'étendant à travers l'arbre (4), qui est composé de deux alésages radiaux (35, 36) et d'un canal axial (37) reliant les deux alésages (35, 36).

8. Unité de transmission selon les revendications 6 et 7, caractérisée en ce que le conduit (30) s'étendant à travers le moyeu (29) est constitué principalement d'un évidement (33) à l'intérieur du moyeu (29), possédant une longueur bien définie, qui vient se relier à un passage (34) reliant le conduit d'alimentation de pression (31) à la chambre de pression (15).

9. Unité de transmission selon l'une quelconque des revendications précédentes, caractérisée en ce qu'on prévoit une restriction (41) dans le système de passage de connexion (26).

10. Unité de transmission selon la revendication 9, caractérisée en ce que la restriction (41) est située entre un rayon (R1) qui est quelque peu inférieur au rayon (R2) de l'arbre (4) en représentant par exemple 70% de ce dernier, et le rayon (R3) de la circonférence du moyeu (29).

11. Unité de transmission selon les revendications 7 et 10, caractérisée en ce que la restriction (41) est prévue dans un élément de passage (40) qui est prévu dans l'alésage (35) qui forme l'entrée du conduit (32) à l'intérieur de l'arbre (4).

12. Unité de transmission selon l'une quelconque des revendications précédentes, caractérisée en ce que la sortie (39) du système de passage de connexion (26) est située à la surface de l'arbre (4) et derrière le piston (25) de ladite unité (13) à cylindre-piston et en ce qu'une paroi de séparation de déflexion (24), reliée au cylindre (23) de ladite unité (13) à cylindre-piston, au moins pour toutes les positions dans lesquelles une connexion s'établit entre la chambre de pression (15) et la chambre de compensation de pression (22), s'étend jusqu'au delà de ladite sortie (39).

13. Unité de transmission selon la revendication 12, caractérisée en ce que la paroi de séparation de déflexion (24), au moins pour la position dans laquelle la demi-poulie (11) apte à se déplacer est disposée à proximité immédiate de la demi-poulie (10) fixe en direction axiale, et plus particulièrement pour toutes les positions dans lesquelles aucune connexion ouverte n'est établie à l'aide du système de passage de connexion (26), est située dans une position telle que son extrémité libre (38) se trouve devant ou à hauteur de la sortie (39).

14. Unité de transmission selon l'une quelconque des revendications précédentes, caractérisée en ce que le milieu hydraulique, du côté de la demi-poulie (10) fixe en direction axiale, est alimentée à l'aide d'un conduit d'alimentation de pression (31) qui est situé au centre de rotation de l'arbre (4) et en ce que le système de passage de connexion (26) comporte un canal axial (37) qui est situé dans le prolongement du conduit d'alimentation de pression (31) (voir la figure 4).

15. Unité de transmission selon l'une quelconque des revendications précédentes, caractérisée en ce que, au moins à l'endroit où est situé la poulie secondaire (6), on obtient ladite compensation de pression à l'aide de ladite chambre de compensation de pression (22) et dudit système de passage de connexion (26) et en ce qu'elle comprend ledit élément de réglage de passage (28), avec lequel le système de passage de connexion (26) est obturé dès que le rayon de déplacement de l'élément de transmission (7) sur la poulie secondaire (6) dépasse une valeur prédéterminée.
